# EUROPÄISCHE PATENTSCHRIFT

(11) **EP 2 689 511 B1**
(45) Veröffentlichungstag und Bekanntmachung des Hinweises auf die Patenterteilung: **31.05.2017**
(21) Anmeldenummer: 11717579.4
(22) Anmeldetag: 27.04.2011
(51) Int. Cl.: H02J 3/18, H02J 3/38

(54) **VERFAHREN UND ANORDNUNG ZUM EINSPEISEN VON ELEKTRISCHER LEISTUNG AUS EINER WINDENERGIEANLAGE IN EIN WECHSELSPANNUNGSNETZ**
METHOD AND ARRANGEMENT FOR FEEDING ELECTRICAL POWER FROM A WIND TURBINE INTO AN AC VOLTAGE NETWORK
PROCÉDÉ ET SYSTÈME DESTINÉS À INJECTER DU COURANT ÉLECTRIQUE PRODUIT PAR UNE ÉOLIENNE DANS UN RÉSEAU À TENSION ALTERNATIVE

(43) Veröffentlichungstag der Anmeldung: 29.01.2014
(73) Patentinhaber: Siemens Aktiengesellschaft, 80333 München (DE)
(72) Erfinder: HERNANDEZ MANCHOLA, Alvaro, Jose, 91052 Erlangen (DE); AUGSBURGER, Friedemann, 90518 Altdorf (DE)
(86) Internationale Anmeldenummer: PCT/EP2011/056658
(87) Internationale Veröffentlichungsnummer: WO 2012/146277

(56) Entgegenhaltungen:
- DE-A1-102008 018 748
- DE-A1-102008 048 258
- US-A1- 2010 264 666

## Beschreibung

Verfahren und Anordnung zum Einspeisen von elektrischer Leistung aus einer Windenergieanlage in ein Wechselspannungsnetz Es ist bekannt, mittels einer Windenergieanlage elektrische Leistung zu gewinnen und diese Leistung über eine Energieübertragungsstrecke in ein Wechselspannungs-Energieversorgungsnetz einzuspeisen. Dabei kann es sich bei der Windenergieanlage um einen einzigen Windgenerator oder um mehrere Windgeneratoren handeln, die dann einen sog. Windpark bilden. Die Leistungsübergabe an das Wechselspannungsnetz erfolgt an einem gemeinsamen Kopplungspunkt, der auch als PCC (point of common coupling) bezeichnet wird. Eine derartige Anordnung wird in der DE102008048258 behandelt. Dieses Dokument offenbart, im Sinne des Wortlauts des Anspruchs 1, ein Verfahren zum Einspeisen von elektrischer Leistung aus einer Windenergieanlage über eine Energieübertragungsstrecke in ein Wechselspannungsnetz an einem gemeinsamen Kopplungspunkt von Energieübertragungsstrecke und Wechselspannungsnetz, bei dem - die Spannung am Ausgang der Windenergieanlage erfasst und dem Anzapfungen-Auswahlregler zugeführt wird und - in Abhängigkeit von der Höhe der erfassten Spannung von dem Anzapfungen-Auswahlregler, bei einem in der Energieübertragungsstrecke angeordneten und mit Anzapfungen versehenen Einspeisetransformator Anzapfungen derart belegt werden, dass am Ausgang der Windenergieanlage eine Spannung auftritt, die zu einer vorgegebenen Spannung am gemeinsamen Kopplungspunkt führt.

Hinsichtlich der Einspeisung von elektrischer Leistung in einen Kopplungspunkt werden von dem jeweiligen Betreiber des Wechselspannungsnetzes Anforderungen bezüglich der Qualität der eingespeisten elektrischen Leistung gestellt, die seitens der Windenergieanlage eingehalten werden müssen. Dazu gehört unter anderem, dass von der Windenergieanlage der Kopplungspunkt mit Blindleistung versorgt werden muss.
Diese Anforderungen sind bisher mittels Blindleistungskompensationsanlagen erfüllt worden, die zuschaltbare Induktivitäten und Kapazitäten aufweisen und sehr aufwändig sind.
Der Erfindung liegt die Aufgabe zugrunde, ein Verfahren zum Einspeisen von elektrischer Leistung aus einer Windenergieanlage über eine Energieübertragungsstrecke in ein Wechselspannungsnetz an einem gemeinsamen Kopplungspunkt anzugeben, mit dem sich bei der Einspeisung von elektrischer Leistung mit vergleichsweise geringem Aufwand die jeweils angeforderte Blindleistung an dem Kopplungspunkt zur Verfügung stellen lässt. Die vorliegende Erfindung löst die Aufgabe durch ein Verfahren und eine Anordnung entsprechend der unabhängigen Ansprüche. Weitere erfindungsgemäße Ausgestaltungen werden durch die abhängigen Ansprüche offenbart.

Die Lösung dieser Aufgabe wird in einem Verfahren zum Einspeisen von Leistung aus einer Windenergieanlage über eine Energieübertragungsstrecke in ein Wechselspannungsnetz an einem gemeinsamen Kopplungspunkt von Energieübertragungsstrecke und Wechselspannungsnetz gesehen, bei dem die Spannung am Kopplungspunkt erfasst und einem Anzapfungen-Auswahlregler zugeführt wird; außerdem wird die Spannung am Ausgang der Windenergieanlage erfasst und dem Anzapfungen-Auswahlregler zugeführt wird; in Abhängigkeit von der Höhe der erfassten Spannungen werden von dem Anzapfungen-Auswahlregler bei einem in der Energieübertragungsstrecke angeordneten und mit Anzapfungen versehenen Einspeisetransformator Anzapfungen derart belegt, dass am Ausgang der Windenergieanlage eine Spannung auftritt, die zu einer vorgegebenen Spannung am gemeinsamen Kopplungspunkt führt.

Der wesentliche Vorteil des Verfahrens besteht darin, dass es - je nach Blindleistungsanforderungen - ohne eine Blindleistungskompensationsanlage oder mit einer relativ kleinen und damit wenig aufwändigen Blindleistungskompensationsanlage auskommt.
Die Verarbeitung der erfassten Spannung am Kopplungspunkt in dem Anzapfungen-Auswahlregler kann bei dem Verfahren in verschiedener Weise erfolgen. Als besonders vorteilhaft wird es zur Erzielung einer stabilen Regelung angesehen, wenn die am Kopplungspunkt erfasste Spannung dahingehend überprüft wird, in welchem von mehreren vorgegebenen Spannungsbereichen sie liegt, und entsprechend dem Ergebnis dieser Prüfung mittels eines Bereichsselektors von mehreren jedem Spannungsbereich der Spannung am Kopplungspunkt zugeordneten Bereichsselektoren für die Ausgangsspannung an der Windenergieanlage ein Anzapfungen-Auswahlregler so beaufschlagt wird, dass die Spannung am Ausgang der Windenergieanlage im Spannungsbereich des jeweiligen Bereichsselektors liegt.
Als besonders vorteilhaft wird es angesehen, wenn Bereichsselektoren mit Spannungsbereichen verwendet werden, die aneinander angrenzend sämtlich innerhalb einer die Abhängigkeit der Spannung am Ausgang der Windenergieanlage von ihrer Blindleistung beschreibenden Kennlinie liegen. Diese Kennlinie wird vom jeweiligen Betreiber des Wechselspannungsnetzes individuell für jeden Kopplungspunkt vorgegeben; durch die oben angegebene Auswahl der Bereichsselektoren ist eine leichte Anpassung an die verschiedenen Gegebenheiten möglich. Vorteilhafterweise werden drei Bereichsselektoren verwendet, weil diese Anzahl für die meisten Anwendungsfälle ausreichend erscheint.
Der Erfindung liegt ferner die Aufgabe zugrunde, eine Anordnung zum Einspeisen von elektrischer Leistung aus einer Windenergieanlage über eine Energieübertragungsstrecke in ein Wechselspannungsnetz an einem gemeinsamen Kopplungspunkt vorzuschlagen, mit der sich mit relativ geringem Aufwand die jeweils an dem Kopplungspunkt zur Verfügung zustellende Blindleistung erzeugen lässt.

Zur Lösung dieser Aufgabe dient eine Anordnung zum Einspeisen von elektrischer Leistung aus einer Windenergieanlage über eine Energieübertragungsstrecke in ein Wechselspannungsnetz an einem gemeinsamen Kopplungspunkt von Energieübertragungsstrecke und Wechselspannungsnetz, bei der ein Spannungseingang eines Anzapfungen-Auswahlreglers über eine Spannungserfassungseinrichtung mit dem gemeinsamen Kopplungspunkt verbunden ist und ein weiterer Spannungseingang des Anzapfungen-Auswahlreglers über eine weitere Spannungserfassungseinrichtung an den Ausgang der Windenergieanlage angeschlossen ist; ein Ausgang des Anzapfungen-Auswahlreglers ist mit einem in der Energieübertragungsstrecke angeordneten und mit Anzapfungen versehenen Einspeisetransformator verbunden, dessen Anzapfungen in Abhängigkeit von der Höhe der erfassten Spannungen von dem Anzapfungen-Auswahlregler derart belegt werden, dass am Ausgang der Windenergieanlage eine Spannung auftritt, die zu einer vorgegebenen Spannung am gemeinsamen Kopplungspunkt führt.
Eine solche Anordnung zeichnet sich vor allem dadurch aus, dass sie ohne eine Blindleistungskompensationsanlage auskommt oder nur eine kleine Blindleistungskompensationsanlage benötigt, weil allein durch Regelungsmaßnahmen die jeweils angeforderte Blindleistung erzeugbar ist.

In einer vorteilhaften Ausgestaltung weist bei der Anordnung der Anzapfungen-Auswahlregler an die eine Spannungserfassungseinrichtung angeschlossene Auswahlbausteine auf, die die am Kopplungspunkt erfasste Spannung dahingehend überprüfen, in welchem von mehreren vorgegebenen Spannungsbereichen sie liegt; den Auswahlbausteinen sind Bereichsselektoren für die Ausgangsspannung an der Windenergieanlage nachgeordnet, und den Bereichsselektoren ist ein Anzapfungen-Einstellregler nachgeordnet, der entsprechend dem Ergebnis der Prüfung in den Auswahlbausteinen über die Bereichsselektoren so beaufschlagt wird, dass die Spannung am Ausgang der Windenergieanlage im Spannungsbereich des jeweiligen Bereichsselektors liegt.

Bei der Anordnung decken Bereichsselektoren Spannungsbereiche ab, die aneinander angrenzend sämtlich innerhalb einer die Abhängigkeit der Spannung am Ausgang der Windenergieanlage von ihrer Blindleistung beschreibenden Kennlinie liegen, womit - wie oben bereits im Zusammenhang mit der Erläuterung des Verfahrens angegeben - eine leichte Anpassung an verschiedene Vorgaben der Betreiber von Wechselspannungsnetzen ermöglicht ist.

Mit Vorteil sind bei der Anordnung drei Bereichsselektoren vorhanden.
Zur weiteren Erläuterung der Erfindung sind in
Fig. 1 ein Ausführungsbeispiel der erfindungsgemäßen Anordnung mit einem Anzapfungen-Auswahlregler, in
Fig. 2 ein Blockschaltbild des Anzapfungen-Auswahlreglers gemäß Fig. 1, in
Fig. 3 eine beispielhafte Kennlinie für die Blindleistungsanforderung an einem Kopplungspunkt und in
Fig. 4 Kennlinien von zwei Windgeneratoren dargestellt.

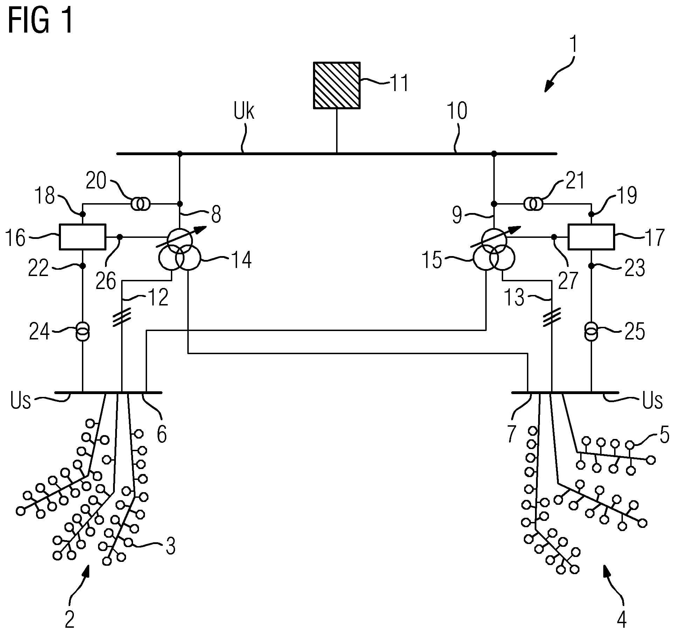

Die in Figur 1 dargestellte elektrische Energie-Einspeise-Anordnung 1 weist eine erste Windenergieanlage 2 mit einer Vielzahl von Windgeneratoren 3 und eine weitere Windenergieanlage 4 mit weiteren Windgeneratoren 5 auf; die Windenergieanlagen 2 und 4 bilden somit einen Windpark, dessen einzelne Windgeneratoren 3 bzw. 5 durch Wind in Rotation versetzt werden, wobei ein elektrischer Strom erzeugt wird. Ein solcher Windpark ist oft auf See angeordnet, weil dort der Wind häufig und verhältnismäßig gleichmäßig weht. Jede der beiden Windenergieanlagen 2 bzw. 4 ist an eine Sammelschiene 6 bzw. 7 angeschlossen, die jeweils auf einer Spannung Us von beispielsweise 33kV liegen. Die beiden Sammelschienen 6 bzw. 7 sind über jeweils eine Energieübertragungsstrecke 8 bzw. 9 mit einem gemeinsamen Kopplungspunkt 10 mit einem nur schematisch dargestellten elektrischen Energieversorgungsnetz 11 an Land verbunden. Jede der beiden Energieübertragungsstrecken 8 bzw. 9 weist ein Seekabel 12 bzw. 13 auf, an die ein Einspeisetransformator 14 bzw. 15 angeschlossen ist, der in der Regel an Land positioniert ist.

Wie die Figur 1 ferner zeigt, ist jedem der Einspeisetransformatoren 14 bzw. 15 ein Anzapfungen-Auswahlregler 16 bzw. 17 zugeordnet. Jeder der beiden Anzapfungen-Auswahlregler 16 bzw. 17 ist mit seinem einen Eingang 18 bzw. 19 über eine Spannungserfassungseinrichtung 20 bzw. 21 beliebiger Ausführung mit dem gemeinsamen Kopplungspunkt 10 verbunden, der auf einer Spannung Uk von beispielsweise 155 kV liegt; jeweils ein weiterer Eingang 22 bzw. 23 der Anzapfungen-Auswahlregler 16 bzw. 17 ist über jeweils eine weitere Spannungserfassungseinrichtung 24 bzw. 25 beliebiger Ausführung mit den Sammelschienen 6 bzw. 7 verbunden. Jeder der Anzapfungen-Auswahlregler 16 bzw. 17 ist mit seinem Ausgang 26 bzw. 27 mit einer nicht näher dargestellten Einstelleinrichtung für die Anzapfungen des jeweiligen Einspeisetransformators 14 bzw. 15 verbunden.

Der Figur 1 ist ebenfalls zu entnehmen, dass die eine Sammelschiene 6 über eine Leitung auch mit dem Einspeisetransformator 15 und die andere Sammelschiene 7 über eine weitere Leitung auch mit dem Einspeisetransformator 15 verbunden ist.

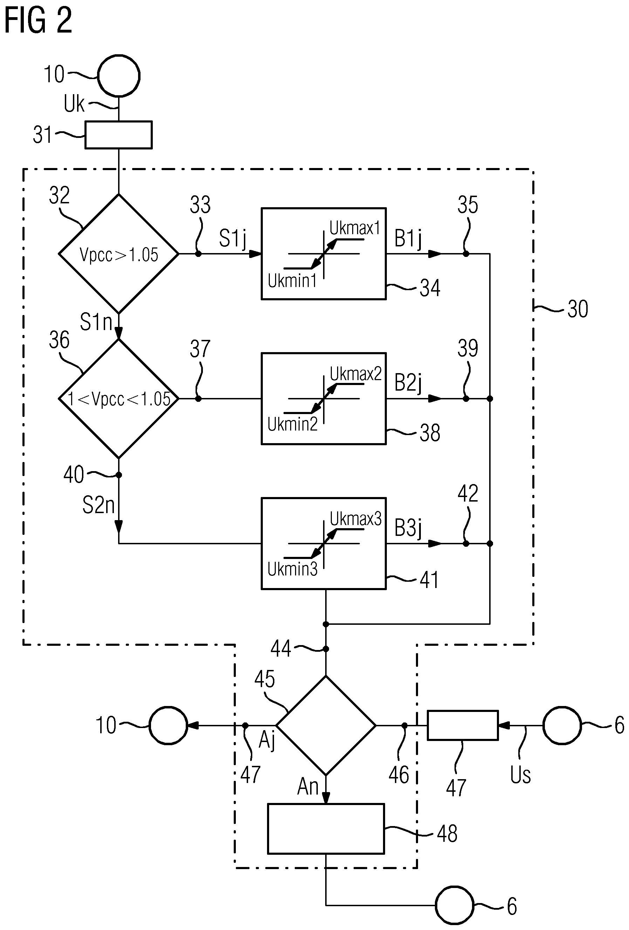

In der Figur 2 ist der Aufbau eines Anzapfungen-Auswahlreglers 30 in Form eines Blockschaltbildes gezeigt; jeder der beiden Auswahl-Regler 16 bzw. 17 gemäß Figur 1 kann so ausgeführt sein, wie es in der Figur 2 gezeigt und nachfolgend näher erläutert ist.

Wie die Figur 2 im Einzelnen zeigt, ist der Anzapfungen-Auswahlregler 30 über eine Spannungserfassungseinrichtung 31 beispielsweise gemäß der Spannungserfassungseinrichtung 20 bzw. 21 gemäß Figur 1 mit dem gemeinsamen Kopplungspunkt 10 verbunden, der hier in Abweichung von der Figur 1 nur schematisch dargestellt ist.

In der Spannungserfassungseinrichtung 31 wird nicht nur die Spannung am gemeinsamen Kopplungspunkt 10 gemessen, sondern es erfolgt auch eine Digitalisierung der erfassten Werte, die in dieser Form einem ersten Auswahlbaustein 32 des Anzapfungen-Auswahlreglers 30 zugeführt werden. Dieser erste Auswahlbaustein 32 erzeugt an seinem Ausgang 33 ein Ja-Signal S1j, wenn die Spannung Uk an dem gemeinsamen Kopplungspunkt 10 größer als 1,05 beispielhaft ist, wobei hierbei eine normierte Spannung verwendet wird, die auf die Nennspannung bezogen ist. Es wird also das Signal S1j gebildet, wenn die Spannung Uk am gemeinsamen Kopplungspunkt 10 größer als 1,05 ist. In diesem Falle wird ein nachgeordneter Bereichsselektor 34 angesteuert, mit dem ein bestimmter Bereich der Spannung Us an der Sammelschiene 6 bzw. 7 (vgl. Figur 1) vorgegeben wird. Der Bereich ist durch die Spannung Ukmin und Ukmax1 definiert, wobei sowohl Ukmax als auch Ukmin1 relativ hohe Werte sind. Am Ausgang 35 des Bereichsselektors 34 tritt also ein Signal auf, wenn die Spannung Uk am gemeinsamen Kopplungspunkt 10 die eingangs genannte Bedingung erfüllt, also relativ groß ist.

Wird im Auswahlbaustein 32 festgestellt, dass die Spannung Uk am gemeinsamen Kopplungspunkt 10 der für den einen Auswahlbaustein 32 definierten Bedingungen nicht genügt, dann wird ein Signal S1n gebildet und es wird in einem nachgeordneten weiteren Auswahlbaustein 36 geprüft, ob die normierte Spannung größer als 1 beispielhaft, aber kleiner als 1,05 ist. Ist dies der Fall, dann wird an einem Ausgang 37 des weiteren Auswahlbausteins 36 ein Signal S2j erzeugt und damit ein nachgeordneter weiterer Bereichsselektor 38 beaufschlagt, der einen Bereich der Spannung Uk an der Sammelschiene 6 bzw. 7 zwischen den Werten Ukmax21 und Ukmin2 abdeckt. Es wird in diesem Falle ein Ausgangssignal B1j am Ausgang 39 des weiteren Bereichsselektors 38 gebildet.

Stellt der weitere Auswahlbaustein 36 fest, dass der für ihn definierte Spannungsbereich der Spannung Uk am gemeinsamen Kopplungspunkt 10 nicht eingehalten ist, dann wird an seinem Ausgang 40 ein Signal S2n erzeugt, das einen zusätzlichen Bereichsselektor 41 beaufschlagt; dieser zusätzliche Bereichsselektor 41 ist für einen Spannungsbereich Ukmin3 bis Ukmax 3 der Spannung an der Sammelschiene 6 bzw. 7 definiert. Es wird in diesem Falle an einem Ausgang 42 des zusätzlichen Bereichsselektors 41 ein Signal B3j abgegeben.

Der Figur 2 lässt sich ferner entnehmen, dass die Ausgänge 35, 39 und 42 der drei Bereichsselektoren 34, 38 und 41 gemeinsam an einen Eingang 44 eines Entscheider-Bausteins 45 geführt sind, der mit einem weiteren Eingang 46 über die weitere Spannungserfassungseinrichtung 47 entsprechend der weiteren Spannungserfassungseinrichtung 24 gemäß Figur 1 mit der Sammelschiene 6 verbunden ist, die hier wiederum nur schematisch dargestellt ist. In dem Entscheider-Baustein 45 wird ständig überprüft, ob die Spannung Us an der Sammelschiene 6 bzw. 7 innerhalb des Bereichs liegt, der mit den Bereichsselektoren 34, 38 und 41 vorgegeben ist. Ist das nicht der Fall, dann wird ein Ausgangssignal An erzeugt, mit dem in einem Anzapfungen-Einsteller 48 die Einstellung von nicht gezeigten Anzapfungen des Einspeisetransformators 14 bzw. 17 verändert wird. Das Ergebnis ist eine Spannung Us an der Sammelschiene 6, aufgrund der die Windgeneratoren 3 bzw. 5 so eingestellt werden, dass am gemeinsamen Kopplungspunkt 10 eine vorgegebene Spannung entsteht, die den Vorgaben des Betreibers des Wechselspannungsnetzes 11 entspricht, wie nachfolgend noch im Einzelnen erläutert wird.

Kommt der Entscheider-Baustein 45 zu dem Ergebnis, dass die Spannung Us an der Sammelschiene 6 in dem jeweils mittels der Bereichsselektoren 34, 38, und 41 ausgewählten Spannungsbereich liegt, dann wird an seinem Ausgang 47 ein Signal Aj erzeugt, auf das hin die Spannung Uk an dem gemeinsamen Kopplungspunkt 10 beibehalten wird.

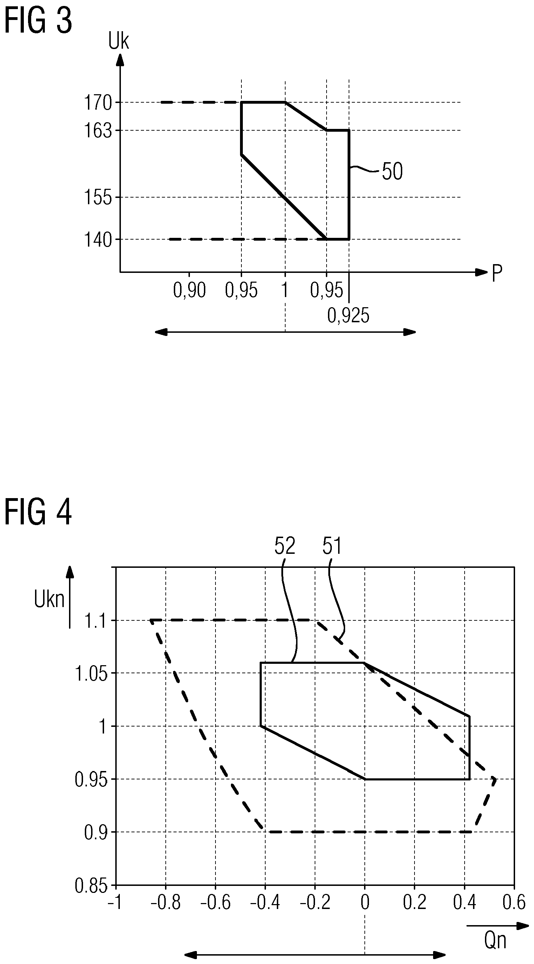

In Figur 3 ist ein Diagramm gezeigt, in dem der Leistungsfaktor P über der Spannung Uk an dem gemeinsamen Kopplungspunkt 10 aufgetragen ist. Eine Kennlinie 50 umfasst Bereiche, die sowohl rechts als auch links vom Leistungsfaktor 1 liegen. Dabei geben die links von dem Leistungsfaktor 1 liegenden Bereiche den Zustand an, in dem die Windgeneratoren 3 bzw. 4 (vgl. Fig. 1) untererregt sind, während der rechts von dem Leistungsfaktor 1 liegende Bereich die Fälle beschreibt, in denen die Windgeneratoren 3 bzw. 4 übererregt sind. Die Kennlinie 50 stellt dabei eine Kennlinie dar, die beispielhaft für eine von einem Betreiber des Wechselspannungsnetzes 11 vorgegebene Kennlinie steht. Die Windgeneratoren müssen also so betrieben werden, dass die Spannung Uk am gemeinsamen Kopplungspunkt 10 in Abhängigkeit von der gelieferten Blindleistung einen Arbeitspunkt ergibt, der innerhalb der Kennlinie 50 liegt.

Wesentlich für das Verständnis des erfindungsgemäßen Verfahrens bzw. der Wirkungsweise der erfindungsgemäßen Anordnung ist die Figur 4, in der in einem Diagramm - normierte Spannung Ukn an der Sammelschiene 6 bzw. 7 über der abgegebenen normierten Leistung Qn (der Bereich links von "0" bezeichnet den untererregten Zustand und der Bereich rechts von "0" den übererregten Zustand der Windgeneratoren) - zwei Kennlinien 51 und 52 für zwei verschiedene Typen von Windgeneratoren dargestellt sind. Es ist zu erkennen, dass jede der beiden Kennlinien 51 bzw. 52 Bereiche aufweist, in denen die Abgabe induktiver bzw. kapazitiver Blindleistung über der normierten Leistung Qn eingeschränkt ist. Betrachtet man beispielsweise die Kennlinie 51, dann ergibt sich, dass eine kapazitive Blindleistungsabgabe im Wesentlichen nur im normierten Spannungsbereich oberhalb von etwa 1,05 und eine kapazitive und induktive Blindleistung Qn zwischen den normierten Spannungswerten Ukn und 1.05 möglich ist, wenn man beide Kennlinien 51 und 52 berücksichtigt. Unterhalb der normierten Spannung Ukn von 1 ist unter Berücksichtigung beider Kennlinien 51 und 52 nur induktive Blindleistung erzeugbar.

Die Erfindung macht sich diese Erkenntnis zu Nutze, indem mittels der oben beschriebenen Bereichsselektoren 35, 38 und 41 (vgl. Figur 2) die Spannungsbereiche der Spannung Us an der Sammelschiene 6 bzw. 7 jeweils ausgewählt werden, die im Hinblick auf die zur Verfügungstellung einer vorgeschriebene Qualität der Leistungszufuhr am gemeinsamen Kopplungspunkt 10 erforderlich ist. So zeigt die Figur 4 sehr deutlich, dass sich mit normierten Spannungen Usn größer als 1,05 an der Sammelschiene 6 gemäß Kennlinie 51 nur kapazitive Blindleistung erzeugen lässt. Im Bereich zwischen 1 und 1,05 der normierten Spannung Ukn ist das Ausmaß der Erzeugung kapazitiver Blindleistung schon verringert, während sich bei Werten der normierten Spannung Ukn unterhalb 1 primär induktive Blindleistung erzeugen lässt. Durch Regelung bzw. Einstellung der Spannung Uk an den Sammelschienen 6 bzw. 7 lässt sich also jeweils ein Erregungszustand der Windgeneratoren herstellen, der die Blindleistungsanforderungen am gemeinsamen Kopplungspunkt 10 erfüllt, ohne dass dafür Blindleistungskompensationsanlagen vorgesehen sein müssen.

Wenn in besonderen Fällen diese Regelung nicht ausreicht, dann müssen zwar auch Blindleistungskompensationsanlagen zum Einsatz gelangen, jedoch können diese viel kleiner und damit mit erheblich weniger Aufwand hergestellt werden, als dies ohne Einsatz der Erfindung möglich ist.

## Patentansprüche

1. Verfahren zum Einspeisen von elektrischer Leistung aus einer Windenergieanlage (2,3) über eine Energieübertragungsstrecke (8, 9) in ein Wechselspannungsnetz (11) an einem gemeinsamen Kopplungspunkt (10) von Energieübertragungsstrecke (8, 9) und Wechselspannungsnetz (11), bei dem
• die Spannung (Uk) am Kopplungspunkt (10) erfasst und einem Anzapfungen-Auswahlregler (16, 17) zugeführt wird,
• die Spannung (Us) am Ausgang der Windenergieanlage (2, 3) erfasst und dem Anzapfungen-Auswahlregler (16, 17) zugeführt wird und
• in Abhängigkeit von der Höhe der erfassten Spannungen (Uk, Us) von dem Anzapfungen-Auswahlregler (16, 17) bei einem in der Energieübertragungsstrecke (8, 9) angeordneten und mit Anzapfungen versehenen Einspeisetransformator (14, 15) Anzapfungen derart belegt werden, dass am Ausgang der Windenergieanlage (2, 3) eine Spannung (Us) auftritt, die zu einer vorgegebenen Spannung (Uk) am gemeinsamen Kopplungspunkt (10) führt,
wobei
• die am Kopplungspunkt (10) erfasste Spannung (Uk) dahingehend überprüft wird, in welchem von mehreren vorgegebenen Spannungsbereichen (Ukmin1 - Ukmax1, Ukmin2 - Ukmax2, Ukmin3 - Ukmax3) sie liegt, und
• entsprechend dem Ergebnis dieser Prüfung mittels eines Bereichsselektors (34, 38, 41) von mehreren jedem Spannungsbereich (Ukmin1-Ukmax1, Ukmin2-Ukmax2, Ukmin3-Ukmax3) der Spannung am Kopplungspunkt (10) zugeordneten Bereichsselektoren (34, 38, 41) für die Ausgangsspannung (Us) an der Windenergieanlage (2, 3) der Anzapfungen-Auswahlregler (14, 15) so beaufschlagt wird, dass die Spannung (Uk) am Ausgang der Windenergieanlage (2, 3) im Spannungsbereich (Ukmin1-Ukmax1, Ukmin2-Ukmax2, Ukmin3-Ukmax3) des jeweiligen Bereichsselektors (34, 38, 41) liegt.

2. Verfahren nach Anspruch 1,
**dadurch gekennzeichnet, dass**
• Bereichsselektoren (34, 38, 41) mit Spannungsbereichen (Ukmin1-Ukmax1, Ukmin2-Ukmax2, Ukmin3-Ukmax3) verwendet werden, die aneinander angrenzend sämtlich innerhalb einer die Abhängigkeit der Spannung (Us) am Ausgang der Windenergieanlage (2, 3) von ihrer Blindleistung (Q) beschreibenden Kennlinie (51, 52) liegen.

3. Verfahren nach Anspruch 1 oder 2,
**dadurch gekennzeichnet, dass**
• drei Bereichsselektoren (34, 38, 41) verwendet werden.

4. Anordnung (1) zum Einspeisen von elektrischer Leistung aus einer Windenergieanlage (2, 3) über eine Energieübertragungsstrecke (8, 9) in ein Wechselspannungsnetz (11) an einem gemeinsamen Kopplungspunkt (10) von Energieübertragungsstrecke (8, 9) und Wechselspannungsnetz (11), bei der
• ein Spannungseingang (18, 19) eines Anzapfungen-Auswahlreglers (16, 17) über eine Spannungserfassungseinrichtung (20, 21) mit dem gemeinsamen Kopplungspunkt (10) verbunden ist,
• ein weiterer Spannungseingang (22, 23) des Anzapfungen-Auswahlreglers (16, 17) über eine weitere Spannungserfassungseinrichtung (22, 23) an den Ausgang (6, 7) der Windenergieanlage (2, 3) angeschlossen ist,
• ein Ausgang (26, 27) des Anzapfungen-Auswahlreglers (16, 17) mit einem in der Energieübertragungsstrecke (8, 9) angeordneten und mit Anzapfungen versehenen Einspeisetransformator (14, 15) verbunden ist, dessen Anzapfungen in Abhängigkeit von der Höhe der erfassten Spannungen (Uk, Us) von dem Anzapfungen-Auswahlregler (16, 17) derart belegt werden, dass am Ausgang der Windenergieanlage (2, 3) eine Spannung (Us) auftritt, die zu einer vorgegebenen Spannung (Uk) am gemeinsamen Kopplungspunkt (10) führt,
• der Anzapfungen-Auswahlregler (16, 17) an die eine Spannungserfassungseinrichtung (20, 21) angeschlossene Auswahlbausteine (32, 36) aufweist, die die am Kopplungspunkt (10) erfasste Spannung (Uk) dahingehend überprüfen, in welchem von mehreren vorgegebenen Spannungsbereichen (Ukmin1-Ukmax1, Ukmin2-Ukmax2, Ukmin3-Ukmax3) sie liegt, und
• den Auswahlbausteinen (32, 36) Bereichsselektoren (34, 38, 41) für die Ausgangsspannung (Us) an der Windenergieanlage (2, 3) nachgeordnet sind, und
• den Bereichsselektoren (34, 38, 41) ein Anzapfungen-Einsteller (48) nachgeordnet ist, der entsprechend dem Ergebnis der Prüfung in den Auswahlbausteinen (32, 36) über die Bereichsselektoren (34, 38, 41) so beaufschlagt wird, dass die Spannung (Us) am Ausgang der Windenergieanlage (2, 3) im Spannungsbereich (Ukmin1-Ukmax1, Ukmin2-Ukmax2, Ukmin3-Ukmax3) des jeweiligen Bereichsselektors (34, 38, 41) liegt.

5. Anordnung nach Anspruch 4,
**dadurch gekennzeichnet, dass**
• die Bereichsselektoren (34, 38, 41) Spannungsbereiche (Ukmin1-Ukmax1, Ukmin2-Ukmax2, Ukmin3-Ukmax3) abdecken, die aneinander angrenzend sämtlich innerhalb einer die Abhängigkeit der Spannung (Us) am Ausgang der Windenergieanlage (2, 3) von ihrer Blindleistung (Qn) beschreibenden Kennlinie liegen.

6. Anordnung nach Anspruch 4 oder 5,
**dadurch gekennzeichnet, dass**
• drei Bereichsselektoren (34, 38, 41) vorhanden sind.

## Claims

1. Method for feeding electrical power from a wind energy installation (2, 3) by means of an energy transmission path (8, 9) to an AC voltage supply system (11) at a point (10) of common coupling of the energy transmission path (8, 9) and the AC voltage supply system (11), in which method
· the voltage (Uk) is detected at the point (10) of coupling and supplied to a tapping selection controller (16, 17),
· the voltage (Us) is detected at the output of the wind energy installation (2, 3) and supplied to the tapping selection controller (16, 17), and
· depending on the level of the detected voltages (Uk, Us), taps are occupied by the tapping selection controller (16, 17), in the case of a feed transformer (14, 15) which is arranged in the energy transmission path (8, 9) and is provided with taps, in such a way that a voltage (Us) which leads to a prespecified voltage (Uk) at the point (10) of common coupling occurs at the output of the wind energy installation (2, 3),
wherein
· the voltage (Uk) which is detected at the point (10) of coupling is checked in respect of which of a plurality of prespecified voltage ranges (Ukmin1 - Ukmax1, Ukmin2 - Ukmax2, Ukmin3 - Ukmax3) it lies in, and
· in accordance with the result of this check, the tapping selection controller (14, 15) is acted on by means of one range selector (34, 38, 41) from amongst a plurality of range selectors (34, 38, 41), which are associated with each voltage range (Ukmin1 - Ukmax1, Ukmin2 - Ukmax2, Ukmin3 - Ukmax3) of the voltage at the point (10) of coupling, for the output voltage (Us) at the wind energy installation (2, 3) such that the voltage (Uk) at the output of the wind energy installation (2, 3) lies in the voltage range (Ukmin1 - Ukmax1, Ukmin2 - Ukmax2, Ukmin3 - Ukmax3) of the respective range selector (34, 38, 41).

2. Method according to Claim 1,
**characterized in that**
· range selectors (34, 38, 41) with voltage ranges (Ukmin1 - Ukmax1, Ukmin2 - Ukmax2, Ukmin3 - Ukmax3) which all lie adjacent to one another within a characteristic curve (51, 52) which describes the dependence of the voltage (Us) at the output of the wind energy installation (2, 3) on its reactive power (Q) are used.

3. Method according to Claim 1 or 2,
**characterized in that**
· three range selectors (34, 38, 41) are used.

4. Arrangement (1) for feeding electrical power from a wind energy installation (2, 3) by means of an energy transmission path (8, 9) to an AC voltage supply system (11) at a point (10) of common coupling of the energy transmission path (8, 9) and the AC voltage supply system (11), in which arrangement
· a voltage input (18, 19) of a tapping selection controller (16, 17) is connected to the point (10) of common coupling by means of a voltage detection device (20, 21),
· a further voltage input (22, 23) of the tapping selection controller (16, 17) is connected to the output (6, 7) of the wind energy installation (2, 3) by means of a further voltage detection device (22, 23),
· an output (26, 27) of the tapping selection controller (16, 17) is connected to a feed transformer (14, 15) which is arranged in the energy transmission path (8, 9) and is provided with taps and of which the taps are occupied by the tapping selection controller (16, 17), depending on the level of the detected voltages (Uk, Us), in such a way that a voltage (Us) which leads to a prespecified voltage (Uk) at the point (10) of common coupling occurs at the output of the wind energy installation (2, 3),
· the tapping selection controller (16, 17) has selection modules (32, 36) which are connected to the one voltage detection device (20, 21) and which check the voltage (Uk) which is detected at the point (10) of coupling in respect of which of a plurality of prespecified voltage ranges (Ukmin1 - Ukmax1, Ukmin2 - Ukmax2, Ukmin3 - Ukmax3) it lies in, and
· range selectors (34, 38, 41) for the output voltage (Us) at the wind energy installation (2, 3) are arranged downstream of the selection modules (32, 36), and
· a tapping adjuster (48) is arranged downstream of the range selectors (34, 38, 41), the said tapping adjuster being acted on by means of the range selectors (34, 38, 41) in accordance with the result of the check in the selection modules (32, 36) such that the voltage (Us) at the output of the wind energy installation (2, 3) lies in the voltage range (Ukmin1 - Ukmax1, Ukmin2 - Ukmax2, Ukmin3 - Ukmax3) of the respective range selector (34, 38, 41).

5. Arrangement according to Claim 4,
**characterized in that**
· the range selectors (34, 38, 41) cover voltage ranges (Ukmin1 - Ukmax1, Ukmin2 - Ukmax2, Ukmin3 - Ukmax3) which all lie adjacent to one another within a characteristic curve which describes the dependence of the voltage (Us) at the output of the wind energy installation (2, 3) on its reactive power (Qn).

6. Arrangement according to Claim 4 or 5, **characterized in that**
· there are three range selectors (34, 38, 41).

## Revendications

1. Procédé d'injection de puissance électrique d'une éolienne ( 2,3 ) par l'intermédiaire d'une section ( 8,9 ) de transport d'énergie dans un réseau ( 11 ) à tension alternative en un point ( 10 ) de couplage commun de la section ( 8,9 ) de transport d'énergie et du réseau ( 11 ) à tension alternative, dans lequel
• on détecte la tension ( Uk ) au point ( 10 ) de couplage et on l'envoie à un régleur ( 16, 17 ) de sélection de prises,
• on détecte la tension ( Us ) à la sortie de l'éolienne ( 2, 3 ) et on l'envoie au régleur ( 16, 17 ) de sélection de prises et
• en fonction du niveau des tensions ( Uk, Us ) détectées, on occupe, par le régleur ( 16, 17 ) de sélection de prises pour un transformateur ( 14, 15 ) d'injection monté dans la section ( 8, 9 ) de transport d'énergie, des prises, de manière à ce qu'il sorte à la sortie de l'éolienne ( 2, 3 ) une tension ( Us ) qui donne une tension ( Uk ) donnée à l'avance au point ( 10 ) de couplage commun,
• on contrôle la tension ( Uk ) détectée au point ( 10 ) de couplage pour savoir dans laquelle de plusieurs plages ( Ukmin1 - Ukmax1, Ukmin2 - Ukmax2, Ukmin3 - Ukmax3 ) de tension donnée à l'avance elle se trouve et
• en fonction du résultat de ce contrôle, on charge le régleur ( 14, 15 ) de sélection de prises, au moyen d'un sélecteur ( 34, 38, 41 ) de plage, parmi plusieurs sélecteurs ( 34, 38, 41 ) de plage, associés à chaque plage ( Ukmin1 - Ukmax1, Ukmin2 - Ukmax2, Ukmin3 - Ukmax3 ) de la tension au point ( 10 ) de couplage, de la tension ( Us ) de sortie à l'éolienne ( 2, 3 ) de manière à ce que la tension ( Uk ) à la sortie de l'éolienne ( 2, 3 ) soit dans la plage (Ukmin1 Ukmax1, Ukmin2 - Ukmax2, Ukmin3 - Ukmax3 ) de tension du sélecteur de plage ( 34, 38, 41 ) respectif.

2. Procédé suivant la revendication 1, **caractérisé en ce que**
• on utilise des sélecteurs ( 34, 38, 41 ) de plage ayant des plages (Ukmin1 - Ukmax1, Ukmin2 - Ukmax2, Ukmin3 - Ukmax3 ) de tension qui, voisines les unes des autres, se trouvent toutes à l'intérieur d'une courbe caractéristique décrivant la variation de la tension ( Us ) à la sortie de l'éolienne ( 2, 3 ) en fonction de sa puissance ( Q ) réactive.

3. Procédé suivant la revendication 1 ou 2, **caractérisé en ce que**
• on utilise trois sélecteurs ( 34, 38, 41 ) de plage.

4. Dispositif d'injection de puissance électrique d'une éolienne ( 2, 3 ) par l'intermédiaire d'une section ( 8, 9 ) de transport d'énergie dans un réseau à tension alternative en un point ( 10 ) de couplage commun de la section ( 8, 9 ) de transport d'énergie et du réseau ( 11 ) à tension alternative, dans lequel
• une entrée ( 18, 19 ) de tension d'un régleur ( 16, 17 ) de sélection de prises est reliée au point ( 10 ) de couplage commun par un dispositif ( 20, 21 ) de détection de tension,
• une autre entrée ( 22, 23 ) de tension du régleur ( 16, 17 ) de sélection de prises est raccordée à la sortie ( 6, 7 ) de l'éolienne ( 2, 3 ) par un autre dispositif ( 22, 23 ) de détection de tension,
• une sortie ( 26, 27 ) du régleur ( 16, 17 ) de sélection de prises est reliée à un transformateur ( 14, 15 ) à injection pourvu de prises et monté dans la section ( 8, 9 ) de transport d'énergie, transformateur dont les prises sont, en fonction du niveau des tensions ( Uk, Us ) détectées, occupées par le régleur ( 16, 17 ) de sélection de prises, de manière à avoir à la sortie de l'éolienne ( 2 ) une tension ( Us ) qui donne une tension ( Uk ) donnée à l'avance au point ( 10 ) de couplage commun,
• le régleur ( 16, 17 ) de sélection de prises a des modules ( 32, 36 ) de sélection, raccordés à un dispositif ( 20, 21 ) de détection de tension, qui contrôlent la tension ( Uk ) détectée au point ( 10 ) de couplage pour savoir où elle se trouve parmi plusieurs plages ( Ukmin1 - Ukmax1, Ukmin2 - Ukmax2, Ukmin3 - Ukmax3 ) de tension données à l'avance et
• en aval des modules ( 32, 36 ) de sélection sont montés des sélecteurs ( 34, 38, 41 ) de plage de la tension ( Us ) de sortie de l'éolienne ( 2, 3 ) et
• en aval des secteurs ( 34, 38, 41 ) de plage est monté un régleur ( 48 ) de prises, qui en fonction du résultat du contrôle, charge les modules ( 32, 36 ) de sélection par les sélecteurs ( 34, 38, 41 ) de plage, de manière à ce que la tension ( Us ) à la sortie de l'éolienne ( 2, 3 ) soit dans la plage ( Ukmin1 - Ukmax1, Ukmin2 - Ukmax2, Ukmin3 - Ukmax3 ) de tension du sélecteur ( 34, 38, 41 ) de plage respectif.

5. Dispositif suivant la revendication 4, **caractérisé en ce que**
• les sélecteurs ( 34, 38, 41 ) de plage recouvrent les plages ( Ukmin1 - Ukmax1, Ukmin2 - Ukmax2, Ukmin3 - Ukmax3 ) de tension qui, voisines les unes des autres, se trouvent toutes sur une courbe caractéristique décrivant la variation de la tension ( Us ) à la sortie de l'éolienne ( 2, 3 ) en fonction de sa puissance ( Qn ) réactive.

6. Dispositif suivant la revendication 4 ou 5, **caractérisé en ce que**
• il y a trois sélecteurs ( 34, 38, 41 ) de plage.
